# EUROPEAN PATENT SPECIFICATION

(11) **EP 4 177 492 B1**
(45) Date of publication and mention of the grant of the patent: **26.06.2024**
(21) Application number: 22205380.3
(22) Date of filing: 03.11.2022
(51) Int. Cl.: F16D 41/36

(54) **ONE-WAY CLUTCH SYSTEM FOR A BICYCLE TRANSMISSION**
EINWEGKUPPLUNGSSYSTEM FÜR EIN FAHRRADGETRIEBE
SYSTÈME D'EMBRAYAGE UNIDIRECTIONNEL POUR TRANSMISSION DE BICYCLETTE

(30) Priority: 03.11.2021 NL 2029610
(43) Date of publication of application: 10.05.2023
(73) Proprietor: Classified Cycling BV, 2060 Antwerpen (BE)
(72) Inventor: VAN DRUTEN, Roëll Marie, 2060 Atwerpen (BE)
(74) Representative: V.O.

(56) References cited:
- EP-A1- 4 067 704
- DE-A1-102018 111 274
- US-A1- 2021 023 878

## Description

### FIELD

The invention relates to a one-way clutch system for a bicycle transmission.

### BACKGROUND

A bicycle transmission typically includes one or more one-way clutches, for allowing independent rotation of a first clutch member relative to a second clutch member in a first rotation direction of the first clutch member, and preventing rotation of the first clutch member relative to the second clutch member in a second opposite rotation direction.

### SUMMARY

It is an object to provide a robust clutch system for a bicycle transmission with low friction losses and efficient torque transmission.

Additionally or alternatively, it is an object to provide silent one-way clutch system.

According to a first aspect is provided a one-way clutch system for a bicycle transmission, comprising a first clutch member and a second clutch member. The first clutch member and the second clutch member share a common axis and are axially displaceable with respect to each other between a coupled state in which the first and second clutch members are in form closed coupling engagement, and an uncoupled state allowing independent rotation of the first clutch member and the second clutch member relative to each other about the common axis. The one-way clutch system comprises an intermediate clutch member comprising a helical spline arranged for cooperating with a complementary helical spline of the first clutch member; and a one-way bearing arranged between the intermediate clutch member and the second clutch member.

Hence, the one-way clutch system allows a free rotation of the first clutch member about the common axis relative to the second clutch member in one rotation direction only. More particular, the one-way clutch system allows a free rotation of the first clutch member about the common axis relative to the second clutch member in a first rotation direction, whereas the one-way clutch system inhibits a free rotation of the first clutch member about the common axis relative to the second clutch member in a second rotation direction. The first rotation direction and the second rotation direction being opposite each other. In the second rotation direction, the first clutch member and the second clutch member are coupled.

The first clutch member and the second clutch member are axially displaceable relative to each other by means of cooperating helical splines - e.g. a first helical spline associated with the first clutch member and a second helical spline associated with the intermediate clutch member. For example, the helical splines may be arranged such that the first clutch member and the second clutch member are driven towards each other when the first clutch member is rotated in the second rotation direction relative to the second clutch member, so as to be brought in form closed coupling engagement with each other.

The one-way bearing, being arranged between the intermediate clutch member and the second clutch member, provides a one-way coupling between the intermediate clutch member and the second clutch member. In a first rotation direction of the intermediate clutch member relative to the second clutch member, the one-way bearing allows a free rotation of the intermediate clutch member relative to the second clutch member. In a second rotation direction of the intermediate clutch member relative to the second clutch member, opposite the first rotation direction, the one-way bearing rotationally couples the intermediate clutch member and the second clutch member to one another. This rotational coupling between the intermediate clutch member and the second clutch member in turn causes the helical splines of the intermediate clutch member and the first clutch member to interact, thus effecting a relative axial displacement of the first and second clutch members towards each other. For example, the intermediate clutch member, when rotationally coupled to the second clutch member, axially entrains the second clutch member towards the first clutch member (and/or the first clutch member towards the second clutch member), so as to allow the first and second clutch members to come in form closed coupling engagement.

The form closed coupling engagement between the first clutch member and the second clutch member can be optimized for efficiently transmitting torque between the first clutch member and the second clutch member in the coupled state. Also, in the uncoupled state, the one-way clutch system provides a substantially frictionless rotation of the first clutch member relative to the second clutch member. The one-way bearing can be used to only activate the form closed coupling engagement between the first clutch member and the second clutch member, i.e. not for transmitting torque between the first and second clutch members. This enables the one-way bearing to be optimized for low rotational friction. Hence, a one-way clutch system can be obtained with efficient torque transmission between the first and second clutch members when coupled, and low friction losses by the one-way bearing when the first and second clutch members are uncoupled. Moreover, the one-way clutch system obviates the need for a ratchet mechanism, thus providing a silent one-way clutch system.

For example, in a gear hub, a sun gear of the planetary gear set can be provided at a stationary rear wheel axle, wherein it may be desired to allow a rotation of the sun gear relative to the rear wheel axle in a first rotation direction of the sun gear only, and to rotationally fix the sun gear to the stationary rear wheel axle when the sun gear is rotated in a second rotation direction relative to the rear wheel axle, opposite the first rotation direction. The gear hub is for instance configured such that in a first transmission ratio of the gear hub, the sun gear is driven in the first rotation direction, and in a second transmission ratio of the gear hub the sun gear is driven in the second rotation direction. Hence, the sun gear could form, include or be fixed to, the first clutch member, such that the one-way clutch system can provide a silent low-friction one-way rotation of the sun gear about a stationary axle, with a high torque transmissivity in the second rotation direction.

Optionally, the first clutch member and the intermediate clutch member are substantially rotationally coupled with each other. For example, the helical spline of the first clutch member and the helical spline of the intermediate clutch member may be meshing with one another while the first and second clutch members are in the coupled state as well as when the first and second clutch members are in the uncoupled state. Hence, the first clutch member can rotationally entrain the intermediate clutch member in the first rotation direction, e.g. when the first clutch member is rotated in the first rotation direction. Also in the second rotation direction, the first clutch member and the intermediate clutch member can both be rotationally coupled to the second clutch member. It will be appreciated that the meshing helical splines are arranged to allow for a relative rotation between the first clutch member and the intermediate clutch member for axially displacing the first clutch member and the second clutch member relative to one another, the relative rotation may be associated with a pitch and/or a length of the cooperating helical splines. A relative rotation between the first clutch member and the intermediate clutch member can occur during a transition between the coupled state and the uncoupled state. For example, upon reversing a rotation direction of the first clutch member from the first rotation direction to the second rotation direction, the intermediate clutch member may rotationally fix to the second, e.g. nonrotating clutch member, by means of the one-way bearing. This causes a change in the relative rotational speed between the first and intermediate clutch members, driving the first clutch member and the intermediate member towards each other.

Optionally, the one-way bearing is arranged for inducing a relative axial displacement between the first clutch member and the second clutch member towards the uncoupled state when rotating the first clutch member in a first rotation direction relative to the second clutch member, and for inducing a relative axial displacement between the first clutch member and the second clutch member towards the coupled state when rotating the first clutch member in a second rotation direction, opposite the first direction, relative to the second clutch member.

Optionally, the one-way bearing is arranged for rotationally coupling the intermediate clutch member to the second clutch member when rotating the intermediate clutch member in a second rotation direction relative to the second clutch member, and rotationally decoupling the intermediate clutch member from the second clutch member when rotating the intermediate clutch member in a first rotation direction, opposite the second rotation direction, relative to the second clutch member.

Optionally, the one-way clutch system comprisies a spring member arranged for biasing the first clutch member and the second clutch member to the uncoupled state. This way, the spring member can drive the axial displacement of the first clutch member relative to the second clutch member from the coupled state to the uncoupled state. Hence, the one-way clutch system may be considered to be "normally open".

Optionally, the first clutch member has first teeth and the second clutch member has second teeth, wherein in the coupled state the first teeth and the second teeth are mated to establish a rotational coupling between the first clutch member and the second clutch member. Mating teeth provide a particular efficient torque transmission between the first clutch member and the second clutch member. Each tooth of the first and second teeth may for example comprise an asymmetrical shape adapted to effectively transmit torque in the second rotation direction of the first clutch member relative to the second clutch member, while facilitating release in the first rotation direction of the first clutch member relative to the second clutch member. Moreover, the configuration of the first and second teeth may be adapted to the pitch of the helical splines to facilitate the interlocking and release of the teeth.

Optionally, the first teeth and the second teeth are arranged to mate by axial displacement. Hence, an axial form closed coupling engagement between the first clutch member and the second clutch member can be obtained, for minimizing radial loads on the first and second clutch members.

Optionally, the one-way bearing is arranged for coupling the intermediate clutch member and the second clutch member in a radial direction. Hence, torque can be efficiently transmitted between the intermediate clutch member and the second clutch member, for activating the relative axial displacement of the first clutch member and the second clutch member.

Optionally, the second clutch member forms an inner race of the one-way bearing.

Optionally, the intermediate clutch member forms an outer race of the one-way bearing. For example, the intermediate clutch member may comprise a ring shaped body, at a radially inward facing side provided with a bearing surface of the one-way bearing, and at a radially outward facing side provided with a helical spline for cooperating with a helical spline of the first clutch member. The intermediate clutch member may be provided radially between the first clutch member and the second clutch member, for providing a particularly compact setup.

Optionally, the one-way bearing is arranged for establishing a force-closed coupling between the intermediate clutch member and the second clutch member when rotating the intermediate clutch member in a second rotation direction relative to the second clutch member. The force closed coupling may be optimized for low friction rotation in one rotation direction and low torque coupling between the intermediate clutch member and the second clutch member in the reverse direction. The one-way bearing may for example comprises a roller bearing, including one or more rollers or sprags that are arranged between the intermediate clutch member and the second clutch member, wherein the one-way bearing is arranged to jam the rollers or sprags between the intermediate clutch member and the second clutch member when the intermediate clutch member is rotated in the second rotation direction relative to the second clutch member.

Optionally, the one-way bearing is a one-way ball bearing. For example, the one-way all bearing may comprise one or more spherical bearing balls, which bearing balls are provided between the intermediate clutch member and the second clutch member. This provides a compact and low-friction set-up.

Optionally, the intermediate clutch member comprises a bearing groove of the one-way ball bearing extending circumferentially around the common axis.

Optionally, the second clutch member comprises a plurality notches of the one-way bearing, wherein, between each notch and the bearing groove of the intermediate clutch member, a bearing ball cavity is formed for accommodating a respective bearing ball of the one-way bearing, each cavity being configured for wedging a bearing ball between the intermediate clutch member and the second clutch member when rotating the intermediate clutch member in the second rotation direction relative to the second clutch member.

Optionally, the second clutch member comprises a bearing groove of the one-way ball bearing extending circumferentially around the common axis.

Optionally, the intermediate clutch member comprises a plurality notches of the one-way bearing, wherein, between each notch and the bearing groove of the second clutch member, a bearing ball cavity is formed for accommodating a respective bearing ball of the one-way bearing, each cavity being configured for wedging a bearing ball between the intermediate clutch member and the second clutch member when rotating the intermediate clutch member in the first rotation direction relative to the second clutch member.

Optionally, each bearing ball is biased towards a non-wedging side of the bearing ball cavity, for enabling low rotational friction. Alternatively, each bearing ball is biased towards a wedging side of the bearing ball cavity, for minimizing backlash.

Optionally, the one-way clutch system comprises a bearing cage arranged for biasing the bearing ball towards the wedging or non-wedging side of the bearing ball cavity. The bearing cage allows for using a minimal number of bearing balls, and for equal spacing between neighboring bearing balls. A tangential biasing member, e.g. an tangentially arranged spring, may be provided for biasing the bearing cage towards the wedging or non-wedging side of the bearing ball cavity.

Optionally, the second clutch member is rotationally coupled to an axle and axially slidable on the axle. The axle may be stationary axle, e.g. a rear wheel axle of a bicycle.

Optionally, the first clutch member is axially coupled to, and/or axially slidable on, the axle and rotationally couplable to the axle via the second clutch member.

According to a second aspect is provided a planetary gear set, comprising a one-way clutch system as described herein.

Optionally, the planetary gear set comprises a ring gear, a planet carrier carrying one or more planet gears, and a sun gear provided on a stationary axle, wherein the sun gear is formed by, or rotationally fixed to, the first clutch member and wherein the second clutch member is, e.g. axially slidably, rotationally coupled to the stationary axle.

Optionally, the sun gear comprises a sun gear body having a main body part extending around the stationary axle, a plurality of teeth extending radially outward from the main body for meshing with the teeth of the one or more planet gears, wherein the sun gear body comprises a reinforcement ring which extends circumferentially around the main body part radially outward therefrom for reinforcing the sun gear, the reinforcement ring and the plurality of teeth being integrally formed.

According to a third aspect is provided a wheel axle system including a driver arranged for receiving one or more sprockets and a wheel hub, and a one-way clutch system as described herein couplably connecting the driver to the wheel hub.

According to a fourth aspect is provided a bicycle transmission, comprising a one-way clutch system as described herein, a planetary gear set according in accordance with the second aspect, and/or a wheel axle system according to the third aspect.

It will be appreciated that any one or more of the above aspects, features and options can be combined. It will be appreciated that any one of the options described in view of one of the aspects can be applied equally to any of the other aspects. It will also be clear that all aspects, features and options described in view of the one-way clutch system apply equally to the planetary gear set, the wheel axle system and the bicycle transmission and vice versa.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a perspective exploded view of an exemplary one-way clutch system;
Fig. 2 shows a side exploded view of the exemplary one-way clutch system;
Fig. 3 shows a cross-sectional view of the exemplary one-way clutch system in a first state;
Fig. 4 shows a cross-sectional view of the exemplary one-way clutch system in a second state;
Fig. 5 shows a cross-sectional view of the exemplary one-way clutch system in a third state.

### DETAILED DESCRIPTION

A traditional bicycle transmission, particularly for a racing bicycle, includes a front derailleur and a rear derailleur for selectively moving a chain between various sprockets of the transmission. An alternative to derailleurs is formed by gear hubs, where a gearing and shifting mechanism is accommodated inside the, generally rear, wheel hub of the bicycle.

In a hybrid form, a gear hub torque transmission having at least two selectable gear ratios is coupled between the rear wheel hub and a rear driver. The rear driver can be rotationally coupled to a cassette of sprockets, wherein a traditional rear derailleur can shift a chain between the sprockets of the rear cassette. The gear hub can include a planetary gear set, comprising at least three rotational members, such as a sun gear, a planet carrier and a ring gear. A gear shifting mechanism is arranged for selectively coupling two of the rotational members of the planetary gear set with each other, e.g. the planet carrier and the ring gear. When coupled, the gear hub operates according to a first transmission ratio. When decoupled, the hub gear shifting mechanism operates according to a second transmission ratio. In this hybrid form, the gear hub can functionally replace the traditional front derailleur.

The sun gear of the planetary gear set may be provided at a stationary rear wheel axle, wherein it may be desired to allow a rotation of the sun gear relative to the rear wheel axle in a single rotation direction only. For example, it may be desired to allow a rotation of the sun gear in a first rotation direction relative to the rear wheel axle, while preventing rotation of the sun gear about a second rotation direction relative to the rear wheel axle, opposite the first rotation direction. For example, in the first transmission ratio of the gear hub the sun gear is driven in the first rotation direction, and in the second transmission ratio of the gear hub the sun gear is driven in the second rotation direction. Preventing rotation of the sun gear in the second rotation direction allows torque to be transferred, here from the planetary gear set, onto the rear wheel axle.

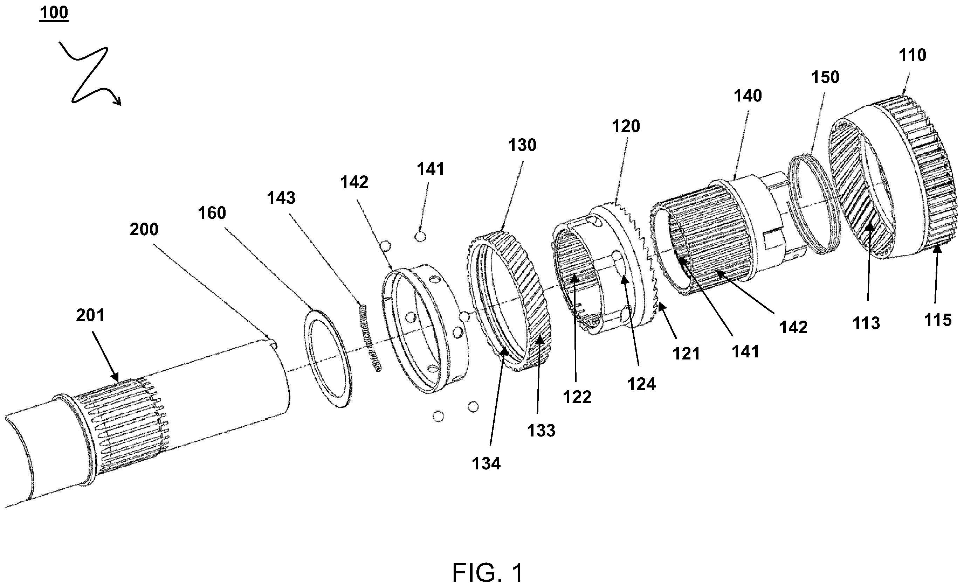

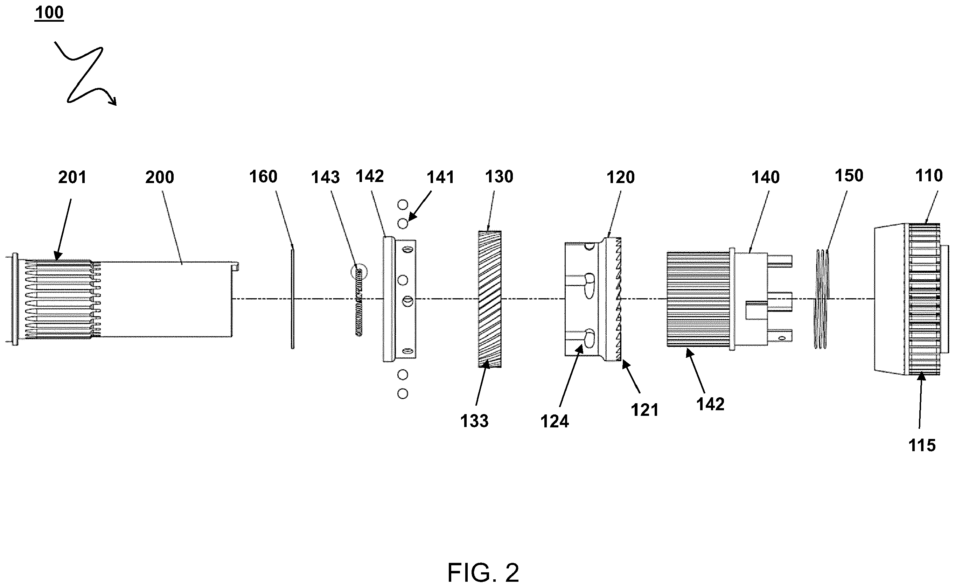

Figs. 1 and 2 show an exploded view of an exemplary one-way clutch system 100 for a bicycle transmission. The one-way clutch system 100 comprises a first clutch member 110 and a second clutch member 120. Here, the first clutch member 110 forms a sun gear of a planetary gear set having external radial teeth 115 for meshing with one or more planet gears of the planetary gear set.

The first clutch member 110 and the second clutch member 120 are rotatable relative to one another around a common axis indicated by the dashed line in Fig. 1. Here, the common axis is defined by an axle 200. In this example, the axle 200 is a stationary axle of a rear wheel of a bicycle, but it will be appreciated that the axle 200 may be rotatable. The axle 200 is provided with an axial spline 201, for cooperating with complementary splines of one or more components, e.g. for rotationally coupling said components to the axle 200, while allowing axial displacement relative to the axle 200.

The one-way clutch system 100 comprises an axle hub 140, including an internal axial spline 141, configured for meshing with the axle axial spline 201, and an external axial spline 142 configured for meshing with an internal axial spline 122 of the second clutch member 120. Accordingly, in this example, the second clutch member 120 is rotationally fixed to the axle hub 140, which in turn is rotationally fixed to the axle 200. Hence, the second clutch member 120 is rotationally coupled to the axle 200. The second clutch member 120 is further movable in axial direction, i.e. in a direction of the common axis, relative to the axle 200 and/or relative to the axle hub 140. It will be appreciated that the second clutch member 120 could alternatively mesh with the axle spline 201 directly.

The one-way clutch system 100 is generally arranged to allow a rotation of the first clutch member 110 about the common axis relative to the second clutch member 120 in a first rotation direction, and to inhibit a rotation of the first clutch member 110 about the common axis relative to the second clutch member 120 in a second rotation direction, opposite the first rotation direction.

The first clutch member 110 and the second clutch member 120 are axially displaceable with respect to one another between a coupled state in which the first 110 and second clutch members 120 are in form closed coupling engagement, and an uncoupled state in which independent rotation is allowed of the first clutch member 110 and the second clutch member 120 relative to each other about the common axis. Hereto, the second clutch member 120 includes axial teeth 121 complementary to axial teeth 111 (not visible in Fig. 1) of the first clutch member 110. The axial teeth extend in axial direction, i.e. in a direction of the common axis, and are in this example asymmetrically shaped, here saw-tooth shaped, for providing efficient torque transmission in the second rotation direction, and for providing smooth disengagement of the first and second clutch members 110, 120 in the first rotation direction.

The one-way clutch system 100 further comprises an intermediate clutch member 130. The intermediate clutch member 130 is, here, provided radially between first clutch member 110 and the second clutch member 120 for obtaining a particularly compact setup. On a radially outward facing side, the intermediate clutch member 130 comprises a helical spline 133, configured for cooperating with a helical spline 113 of the first clutch member 110.

Between the intermediate clutch member 130 and the second clutch member 120, a one-way bearing is arranged, for providing a one-way coupling between the intermediate clutch member 130 and the second clutch member 120. The one-way bearing is arranged for rotationally coupling the intermediate clutch member 130 and the second clutch member 120 with each other, when the intermediate clutch member 130 is rotated in the second rotation direction relative to the second clutch member 120; and for decoupling the intermediate clutch member 130 and the second clutch member 120 from each other, when the intermediate clutch member 130 is rotated in the first rotation direction relative to the second clutch member 120.

The one-way bearing is formed between the intermediate clutch member 130 and the second clutch member 120. E.g. the one-way bearing forms an interface between the intermediate clutch member 130 and the second clutch member 120. The one-way bearing is particularly arranged for providing a force-closed coupling between the intermediate clutch member 130 and the second clutch member 120, when the intermediate clutch member 130 is rotated in the second rotation direction. Here, the intermediate clutch member 130 forms an outer race of the one-way bearing, comprising a circumferentially extending bearing groove 134 at a radially inward facing side of the intermediate clutch member 130. The second clutch member 120, here, forms an inner race of the one-way bearing, comprising a plurality of asymmetrical notches 124 at a radially outward facing side of the second clutch member 120. Each of the asymmetrical notches 124 is arranged for accommodating a respective bearing ball 141 of the one-way bearing. Each notch 124 is configured for wedging a bearing ball 141 between the intermediate clutch member 130 and the second clutch member 120 when the intermediate clutch member 130 is rotated in the second rotation direction relative to the second clutch member 120. This way, the intermediate clutch member 130 and the second clutch member 120 can be force-closed coupled to each other when the intermediate clutch member 130 is rotated in said second relative rotation direction; and decoupled from each other when the intermediate clutch member 130 is rotated in said first relative rotation direction. It will be appreciated that, in an alternative configuration, the intermediate clutch member 130 can comprise the plurality of asymmetrical notches 124 at a radially inward facing side thereof, and the second clutch member 120 can comprise the circumferentially extending bearing groove 134 at a radially outward facing side thereof.

In this example, the one-way bearing includes a bearing cage 142, and a tangential biasing member 143, here a tangentially arranged spring, for biasing the bearing cage 142, and hence the bearing balls 141, towards the wedging side of the notches 124. This minimizes back lash. Also in this example a spacer ring 160 is provided for facilitating rotation.

An axial biasing member 150, here an axially arranged spring, is provided between the first clutch member 110 and the second clutch member 120 for axially biasing the first clutch member 110 and the second clutch member 120 axially in the uncoupled state.

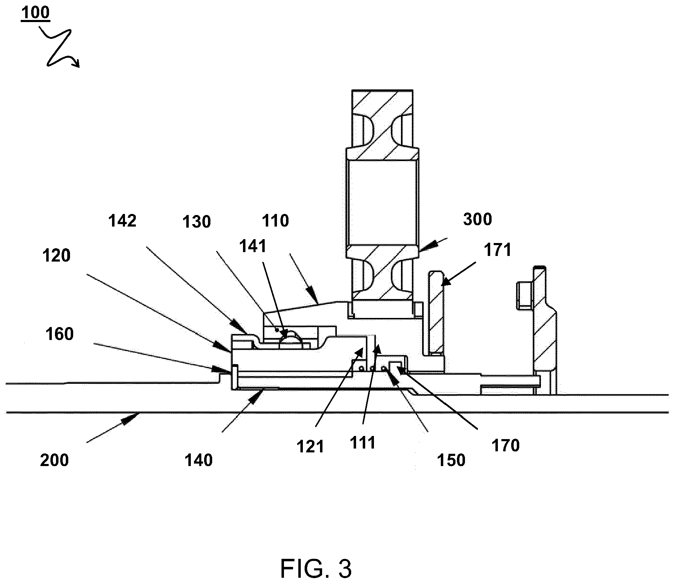

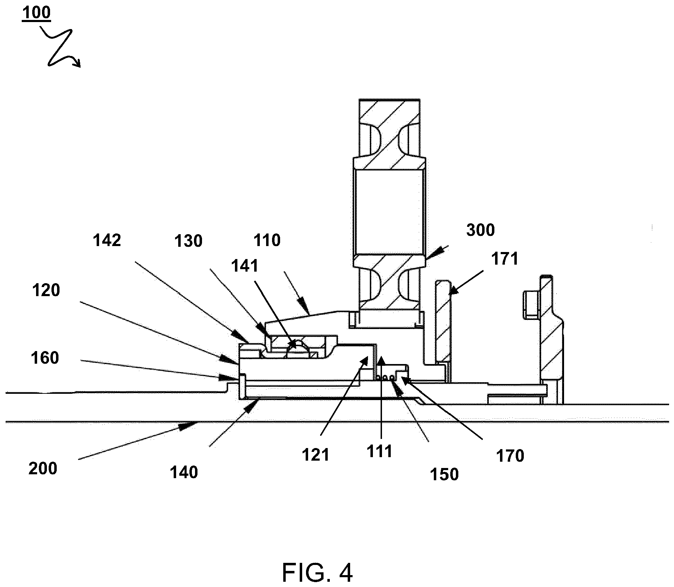

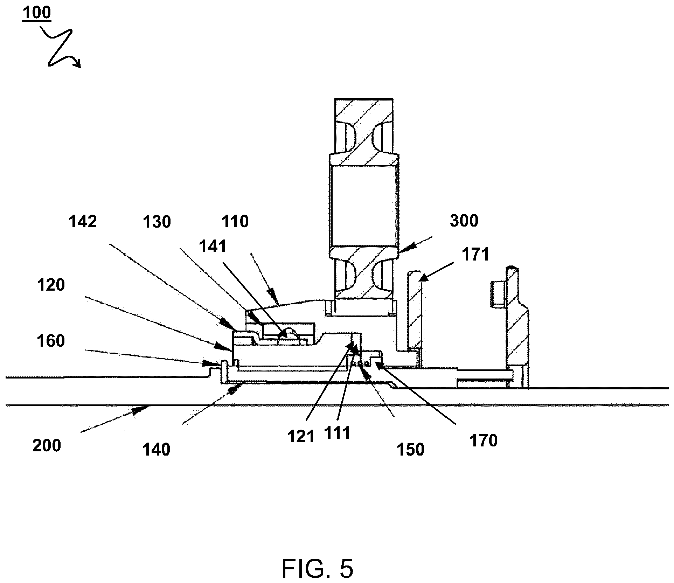

Figs. 3-5 show a cross-sectional view of the one-way clutch system of Figs. 1 and 2, in an assembled state. The first clutch member 110 and the second clutch member 120 are axially movable with respect to each other between an uncoupled state shown in Fig. 3, allowing independent rotation of the first clutch member 110 and the second clutch member 120 relative to each other about the common axis, and a coupled state shown in Fig. 5, in which the first 110 and second clutch 120 members are in form closed coupling engagement. Fig. 4 shows the one-way clutch system 100 in a state intermediate the uncoupled state shown in Fig. 3 and the coupled state shown in Fig. 5.

The axial biasing member 150 biases the first clutch member 110 and the second clutch member 120 towards the uncoupled state as shown in Fig. 3. The axial biasing member 150 is, here, a helical compression spring that is provided coaxial with the common axis between the second clutch member 120 and a ridge 170, here a ridge formed by the axle hub 140. The ridge 170 on one axial side thereof abuts the axial biasing member, and at an opposite axial side is configured for abutting the first clutch member 110 so as to form an axial stop for the first clutch member 110. Hence, in this example an axial movement of the first clutch member 110 in a direction towards the second clutch member 120 is blocked by the ridge 170. Further, an axial movement of the first clutch member 110 in a direction away from the second clutch member 120 is in this example blocked by an axial blocking organ 171. The ridge 170 and the axial blocking organ 171 are axially spaced apart so as to allow a little axial movement of the first clutch member 110, to prevent over-contraining of the one-way clutch system.

Here, the second clutch member 120 is rotationally fixed to the stationary axle 200, via the axle hub 140, by means of the axial splines 201, 141, 142, 122. Further, the first clutch member 110 and the intermediate clutch member 130 are substantially rotationally fixed to each other by means of the meshing helical splines 113, 133. It will be appreciated that the helical splines 113 and 133 allow for a small relative rotation between the first clutch member 110 and the intermediate clutch member 130.

When the first clutch member 110, here forming a sun gear of a planetary gear set, is driven, e.g. by a planet gear 300 of the planetary gear set, in a first rotation direction relative to the stationary axle 200, the first clutch member 110 entrains the intermediate clutch member 130 to also rotate in said first rotation direction.

The exemplary one-way clutch system 100 is particularly described for use in a planetary gear set of a gear hub transmission. It will however be evident that the one-way clutch 100 can also be used for many other freewheel or overrunning coupling situations, e.g. in a freehub of a bicycle, for transferring torque from a hub mounted electric motor onto a stationary wheel axle, etc..

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the spirit and scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean `at least one', and do not exclude a plurality. The mere fact that certain measures are recited in mutually different claims does not indicate that a combination of these measures cannot be used to an advantage.

## Claims

1. A one-way clutch system (100) for a bicycle transmission, comprising:
a first clutch member (110);
a second clutch member (120);
wherein the first clutch member and the second clutch member share a common axis and are axially displaceable with respect to each other between a coupled state in which the first and second clutch members are in form closed coupling engagement, and an uncoupled state allowing independent rotation of the first clutch member and the second clutch member relative to each other about the common axis;
**characterised in that** it further comprises
an intermediate clutch member of (130) comprising a second helical spline (133) arranged for cooperating with a complementary first helical spline (113) of the first clutch member; and
a one-way bearing arranged between the intermediate clutch member and the second clutch member,
wherein the one-way bearing provides a one-way coupling between the intermediate clutch member and the second clutch member, such that:
in a first rotation direction of the second clutch member relative to the intermediate clutch member, the one-way bearing rotationally couples the intermediate clutch member and the second clutch member to one another, and wherein the helical splines are arranged such that when the second clutch member is rotated in the first rotation direction relative to first clutch member, the second clutch member and the first clutch member are driven towards each other thus effecting a relative axial displacement of the first and second clutch members towards each other, so as to be brought in form closed coupling engagement with each other, and
in a second rotation direction of the second clutch member relative to the intermediate clutch member, opposite the first rotation direction, the one-way bearing allows a free rotation of the intermediate clutch member relative to the second clutch member.

2. The one-way clutch system according to claim 1, comprising a spring member (150) arranged for biasing the first clutch member and the second clutch member to the uncoupled state.

3. The one-way clutch system according to any preceding claim,
wherein the first clutch member has first teeth (115) and the second clutch member has second teeth (121),
wherein in the coupled state the first teeth and the second teeth are mated to establish a form closed rotational coupling between the first clutch member and the second clutch member, wherein optionally the first teeth and the second teeth are arranged to mate axially.

4. The one-way clutch system according to any preceding claim, wherein the one-way bearing is arranged for establishing a force-closed coupling between the intermediate clutch member (130) and the second clutch member (120) when rotating the intermediate clutch member in a second rotation direction relative to the second clutch member.

5. The one-way clutch system according to any preceding claim, wherein the one-way bearing is a one-way ball bearing, wherein the intermediate clutch member (130) comprises a bearing groove (134) of the one-way ball bearing extending circumferentially around the common axis, wherein the second clutch member comprises a plurality notches (124) of the one-way bearing, wherein, between each notch and the bearing groove of the intermediate clutch member, a bearing ball cavity is formed for accommodating a respective bearing ball of the one-way bearing, each cavity being configured for wedging a bearing ball between the intermediate clutch member and the second clutch member when rotating the intermediate clutch member in the second rotation direction relative to the second clutch member.

6. The one-way clutch system according to claim 5, wherein the second clutch member comprises a bearing groove (134) of the one-way ball bearing extending circumferentially around the common axis, wherein optionally the intermediate clutch member comprises a plurality notches of the one-way bearing, wherein, between each notch and the bearing groove of the second clutch member, a bearing ball cavity is formed for accommodating a respective bearing ball of the one-way bearing, each cavity being configured for wedging a bearing ball between the intermediate clutch member and the second clutch member when rotating the intermediate clutch member in the first rotation direction relative to the second clutch member.

7. The one-way clutch system according to at least claim 5 or 6, wherein each bearing ball (141) is biased towards a wedging or non-wedging side of the bearing ball cavity, and optionally comprising a bearing cage (142) arranged for biasing the bearing ball towards the wedging or non-wedging side of the bearing ball cavity.

8. The one-way clutch system according to any preceding claim, wherein the second clutch member is rotationally coupled to an axle and/or axially slidable on the axle.

9. The one-way clutch system according to any preceding claim, wherein the first clutch member is axially coupled to, or axially slidable on, the axle and rotationally couplable to the axle via the second clutch member.

10. Planetary gear set, comprising a one-way clutch system according to any preceding claim.

11. Planetary gear set according to claim 10, comprising a ring gear, a planet carrier carrying one or more planet gears, and a sun gear provided on a stationary axle, wherein the sun gear is formed by or rotationally fixed to the first clutch member and wherein the second clutch member is, e.g. axially slidably, rotationally coupled to the stationary axle.

12. Wheel axle system including a driver arranged for receiving one or more sprockets and a wheel hub, and a one-way clutch system according to any of claims 1-9 couplably connecting the driver to the wheel hub.

13. Bicycle transmission, comprising a one-way clutch system according to any of claims 1-9, a planetary gear set according to claim 10 or 11, and/or a wheel axle system according to claim 12.

## Patentansprüche

1. Freilaufsystem (100) für ein Fahrradgetriebe, aufweisend:
ein erstes Kupplungselement (110);
ein zweites Kupplungselement (120);
wobei das erste Kupplungselement und das zweite Kupplungselement eine gemeinsame Achse haben und in Bezug zueinander axial versetzbar sind zwischen einem gekoppelten Zustand, in dem das erste und das zweite Kupplungselement in formschlüssigem Kupplungseingriff stehen und einem ungekoppelten Zustand, der die unabhängige Rotation des ersten Kupplungselements und des zweiten Kupplungselements relativ zueinander um die gemeinsame Achse ermöglicht;
**dadurch gekennzeichnet, dass** es weiterhin aufweist
ein Zwischenkupplungselement (130), aufweisend eine zweite Schrägverzahnung (133), der dazu eingerichtet ist, mit einer komplementären ersten Schrägverzahnung (113) des ersten Kupplungselements zusammenzuwirken; und
ein Freilauflager, das zwischen dem Zwischenkupplungselement und dem zweiten Kupplungselement angebracht ist,
wobei das Freilauflager eine einseitige Kupplung zwischen dem Zwischenkupplungselement und dem zweiten Kupplungselement bereitstellt, so dass:
in einer ersten Rotationsrichtung des zweiten Kupplungselements relativ zu dem Zwischenkupplungselement das Freilauflager das Zwischenkupplungselement und das zweite Kupplungselement drehkoppelt und wobei die Schrägverzahnungen so angebracht sind, dass, wenn das zweite Kupplungselement in der ersten Rotationsrichtung relativ zu dem ersten Kupplungselement gedreht wird, das zweite Kupplungselement und das erste Kupplungselement zueinander angetrieben werden und damit eine relative axiale Verschiebung des ersten und zweiten Kupplungselements zueinander hin bewirkt wird, so dass sie in einen formschlüssigen gekoppelten Eingriff miteinander gebracht werden, und
in einer zweiten Rotationsrichtung des zweiten Kupplungselements relativ zum Zwischenkupplungselement, entgegen der ersten Rotationsrichtung, das Freilauflager eine freie Rotation des Zwischenkupplungselements relativ zum zweiten Kupplungselement ermöglicht.

2. Freilaufsystem nach Anspruch 1, aufweisend ein Federelement (150) und dazu eingerichtet, das erste Kupplungselement und das zweite Kupplungselement in den ungekoppelten Zustand vorzuspannen.

3. Freilaufsystem nach einem der vorhergehenden Ansprüche, wobei das erste Kupplungselement erste Zähne (115) aufweist und das zweite Kupplungselement zweite Zähne (121) aufweist, wobei die ersten Zähne und die zweiten Zähne im gekoppelten Zustand gepaart werden, um eine formschlüssige Drehkupplung zwischen dem ersten Kupplungselement und dem zweiten Kupplungselement herzustellen, wobei die ersten Zähne und die zweiten Zähne optional so angebracht sind, dass sie axial gepaart werden.

4. Freilaufsystem nach einem der vorhergehenden Ansprüche, wobei das Freilauflager so angebracht ist, dass eine formschlüssige Kupplung zwischen dem Zwischenkupplungselement (130) und dem zweiten Kupplungselement (120) hergestellt werden kann, wenn das Zwischenkupplungselement in einer zweiten Rotationsrichtung relativ zum zweiten Kupplungselement gedreht wird.

5. Freilaufsystem nach einem der vorhergehenden Ansprüche, wobei das Freilauflager ein Freilaufkugellager ist, wobei das Zwischenkupplungselement (130) eine Lagerrille (134) des Freilaufkugellagers aufweist, die sich in Umfangsrichtung um die gemeinsame Achse erstreckt, wobei das zweite Kupplungselement eine Mehrzahl von Nuten (124) des Freilauflagers aufweist, wobei zwischen jeder Nut und der Lagerrille des Zwischenkupplungselements ein Hohlraum für die Lagerkugel gebildet ist für die Unterbringung einer jeweiligen Lagerkugel des Freilauflagers, wobei jeder Hohlraum dazu eingerichtet ist, eine Lagerkugel zwischen dem Zwischenkupplungselement und dem zweiten Kupplungselement zu verkeilen, wenn das Zwischenkupplungselement in der zweiten Rotationsrichtung relativ zum zweiten Kupplungselement gedreht wird.

6. Freilaufsystem nach Anspruch 5, wobei das zweite Kupplungselement eine Lagerrille (134) des Freilaufkugellagers aufweist, die sich in Umfangsrichtung um die gemeinsame Achse erstreckt, wobei das Zwischenkupplungselement optional eine Mehrzahl von Nuten des Freilauflagers aufweist, wobei, zwischen jeder Nut und der Lagerrille des zweiten Kupplungselements, ein Hohlraum für eine Lagerkugel gebildet ist für die Unterbringung einer jeweiligen Lagerkugel des Freilauflagers, wobei jeder Hohlraum dazu eingerichtet ist, eine Lagerkugel zwischen dem Zwischenkupplungselement und dem zweiten Kupplungselement zu verkeilen, wenn das Zwischenkupplungselement in der ersten Rotationsrichtung relativ zum zweiten Kupplungselement gedreht wird.

7. Freilaufsystem nach mindestens Anspruch 5 oder 6, wobei jede Lagerkugel (141) in Richtung einer keilenden oder nicht keilenden Seite des Hohlraums für die Lagerkugel vorgespannt ist und optional einen Lagerkäfig (142) aufweist, der dazu eingerichtet ist, die Lagerkugel in Richtung der keilenden oder nicht keilenden Seite des Hohlraums für die Lagerkugel vorzuspannen.

8. Freilaufsystem nach einem der vorhergehenden Ansprüche, wobei das zweite Kupplungselement an eine Achse drehgekoppelt ist und/oder auf der Achse axial verschiebbar ist.

9. Freilaufsystem nach einem der vorhergehenden Ansprüche, wobei das erste Kupplungselement axial gekoppelt an oder axial verschiebbar auf der Achse ist und an die Achse über das zweite Kupplungselement drehgekoppelt ist.

10. Planetengetriebe aufweisend ein Freilaufsystem nach einem der vorhergehenden Ansprüche.

11. Planetengetriebe nach Anspruch 10, aufweisend einen Zahnkranz, einen Planetenträger, der ein oder mehrere Planetengetriebe trägt und ein Sonnenrad auf einer gestellfesten Achse, wobei das Sonnenrad vom ersten Kupplungselement gebildet wird oder drehbar auf diesem gelagert ist und wobei das zweite Kupplungselement z. B. axial verschiebbar an der gestellfesten Achse drehgekoppelt ist.

12. Radachsensystem mit einem Mitnehmer zur Aufnahme eines oder mehrerer Kettenräder und einer Radnabe und ein Freilaufsystem nach einem der Ansprüche 1 bis 9, die den Mitnehmer kuppelbar mit der Radnabe verbinden.

13. Fahrradgetriebe aufweisend ein Freilaufsystem nach einem der Ansprüche 1 bis 9, ein Planetengetriebe nach Anspruch 10 oder 11 und/oder ein Radachsensystem nach Anspruch 12.

## Revendications

1. Système d'embrayage unidirectionnel (100) pour une transmission de bicyclette, comprenant :
un premier élément d'embrayage (110) ; un deuxième élément d'embrayage (120) ;
dans lequel le premier élément d'embrayage et le deuxième élément d'embrayage partagent un axe commun et peuvent se déplacer axialement l'un par rapport à l'autre entre un état couplé dans lequel les premier et deuxième éléments d'embrayage sont en prise de couplage fermée, et un état non couplé permettant une rotation indépendante du premier élément d'embrayage et du deuxième élément d'embrayage l'un par rapport à l'autre autour de l'axe commun ;
**caractérisé en ce qu'**il comprend en outre
un élément d'embrayage intermédiaire (130) comprenant une deuxième cannelure hélicoïdale (133) agencée pour coopérer avec une première cannelure hélicoïdale complémentaire (113) du premier élément d'embrayage ; et
un roulement unidirectionnel disposé entre l'élément d'embrayage intermédiaire et le deuxième élément d'embrayage,
dans lequel le roulement unidirectionnel fournit un couplage unidirectionnel entre l'élément d'embrayage intermédiaire et le deuxième élément d'embrayage, de telle sorte que :
dans un premier sens de rotation du deuxième élément d'embrayage par rapport à l'élément d'embrayage intermédiaire, le roulement unidirectionnel s'accouple en rotation l'élément d'embrayage intermédiaire et le deuxième élément d'embrayage l'un par rapport à l'autre, et dans lequel les cannelures hélicoïdales sont disposées de telle sorte que lorsque le deuxième élément d'embrayage tourne dans le premier sens de rotation par rapport au premier élément d'embrayage, le deuxième élément d'embrayage et le premier élément d'embrayage sont entraînés l'un vers l'autre effectuant ainsi un déplacement axial relatif du premier et du deuxième élément d'embrayage l'un vers l'autre, de manière à être amenés sous forme d'un engagement d'accouplement fermé l'un avec l'autre, et
dans un deuxième sens de rotation du deuxième élément d'embrayage par rapport à l'élément d'embrayage intermédiaire, opposé au premier sens de rotation, le roulement unidirectionnel permet une rotation libre de l'élément d'embrayage intermédiaire par rapport au deuxième élément d'embrayage.

2. Système d'embrayage unidirectionnel selon la revendication 1, comprenant un élément à ressort (150) agencé pour solliciter le premier élément d'embrayage et le deuxième élément d'embrayage vers l'état désaccouplé.

3. Système d'embrayage unidirectionnel selon l'une quelconque des revendications précédentes, dans lequel le premier élément d'embrayage a des premières dents (115) et le deuxième élément d'embrayage a des deuxièmes dents (121), dans lequel, à l'état couplé, les premières dents et les deuxièmes dents sont accouplés pour établir un couplage rotatif fermé entre le premier élément d'embrayage et le deuxième élément d'embrayage, dans lequel facultativement les premières dents et les deuxièmes dents sont agencées pour s'accoupler axialement,

4. Système d'embrayage unidirectionnel selon l'une quelconque des revendications précédentes, dans lequel le roulement unidirectionnel est agencé pour établir un couplage fermé par force entre l'élément d'embrayage intermédiaire (130) et le deuxième élément d'embrayage (120) lors de la rotation de l'embrayage intermédiaire dans un deuxième sens de rotation par rapport au deuxième élément d'embrayage.

5. Système d'embrayage unidirectionnel selon l'une quelconque des revendications précédentes,
dans lequel le roulement unidirectionnel est un roulement à billes unidirectionnel, dans lequel l'élément d'embrayage intermédiaire (130) comprend une rainure de roulement (134) du roulement à billes unidirectionnel s'étendant circonférentiellement autour de l'axe commun, dans lequel le deuxième élément d'embrayage comprend une pluralité d'encoches (124) du roulement unidirectionnel, dans lequel, entre chaque encoche et la rainure de roulement de l'élément d'embrayage intermédiaire, une cavité à billes de roulement est formée pour recevoir une bille de roulement respective du roulement unidirectionnel, chaque cavité étant configurée pour coincer une bille de roulement entre l'élément d'embrayage intermédiaire et le deuxième élément d'embrayage lors de la rotation de l'élément d'embrayage intermédiaire dans le deuxième sens de rotation par rapport au deuxième élément d'embrayage.

6. Système d'embrayage unidirectionnel selon la revendication 5, dans lequel le deuxième élément d'embrayage comprend une rainure de roulement (134) du roulement à billes unidirectionnel s'étendant circonférentiellement autour de l'axe commun, dans lequel éventuellement l'élément d'embrayage intermédiaire comprend une pluralité d'encoches du roulement unidirectionnel, dans lequel, entre chaque encoche et la rainure de roulement du deuxième élément d'embrayage, une cavité à billes de roulement est formée pour recevoir une bille de roulement respective du roulement unidirectionnel, chaque cavité étant configurée pour coincer une bille de roulement entre l'élément d'embrayage intermédiaire et le deuxième élément d'embrayage lors de la rotation de l'élément d'embrayage intermédiaire dans le premier sens de rotation par rapport au deuxième élément d'embrayage.

7. Système d'embrayage unidirectionnel selon au moins la revendication 5 ou 6, dans lequel chaque bille de roulement (141) est sollicitée vers un côté calant ou non de la cavité à bille de roulement, et comprenant éventuellement une cage de roulement (142) agencée pour solliciter la bille de roulement vers le côté calant ou non de la cavité à bille de roulement,

8. Système d'embrayage unidirectionnel selon l'une quelconque des revendications précédentes, dans lequel le deuxième élément d'embrayage est couplé en rotation à un essieu et/ou peut coulisser axialement sur l'essieu.

9. Système d'embrayage unidirectionnel selon l'une quelconque des revendications précédentes, dans lequel le premier élément d'embrayage est couplé axialement à, ou susceptible de coulisser axialement sur, l'essieu et pouvant être couplé en rotation à l'essieu via le deuxième élément d'embrayage.

10. Train planétaire, comprenant un système d'embrayage unidirectionnel selon l'une quelconque des revendications précédentes.

11. Train planétaire selon la revendication 10, comprenant une couronne dentée, un porte-satellites portant un ou plusieurs satellites, et un planétaire prévu sur un axe fixe, dans lequel le planétaire est formé par ou fixé en rotation au premier élément d'embrayage, et dans lequel le deuxième élément d'embrayage est, par exemple, de manière coulissante axialement, couplé en rotation à l'essieu fixe.

12. Système d'essieu de roue comprenant un entraîneur agencé pour recevoir un ou plusieurs pignons et un moyeu de roue, et un système d'embrayage unidirectionnel selon l'une quelconque des revendications 1 à 9 reliant de manière couplable l'entraîneur au moyeu de roue.

13. Transmission de bicyclette, comprenant un système d'embrayage unidirectionnel selon l'une quelconque des revendications 1 à 9, un train planétaire selon la revendication 10 ou 11, et/ou un système d'essieu de roue selon la revendication 12.
